# DEMANDE DE BREVET EUROPEEN

(11) **EP 4 033 089 A1**
(43) Date de publication de la demande: **27.07.2022**
(21) Numéro de dépôt: 22152846.6
(22) Date de dépôt: 24.01.2022
(51) Int. Cl.: F03D 1/06

(54) **EOLIENNE À PALES DÉPORTÉES**

(30) Priorité: 25.01.2021 CH 652021
(71) Demandeur: De Martini, Charles Maximilien, 2000 Neuchâtel (CH)
(72) Inventeur: De Martini, Charles Maximilien, 2000 Neuchâtel (CH)
(74) Mandataire: P&TS SA (AG, Ltd.)

(57) **Abrégé**

La présente invention décrit une éolienne (1) comprenant un moyeu (30) et un support de pales (20) formant un plan (P20) perpendiculaire à l'axe de rotation (A), sur lequel sont disposées une pluralité de pales externes (10) déportées par rapport au moyeu. Les pales externes sont orientées selon un plan (P10), incliné par rapport au plan (P20) d'un angle (Q) compris entre environ 89° et environ 40°.

## Description

### Domaine technique

La présente invention concerne une éolienne à pales déportées. En particulier, l'éolienne ici décrite comporte un jeu de pales disposées à distance du moyeu, sur la partie périphérique d'un support de pales.

### Etat de la technique

L'utilisation et la production d'énergies renouvelables font l'objet de nombreux développements, en particulier dans le domaine des éoliennes. Les éoliennes communément utilisées comportent un nombre réduit de pales, en général trois, disposées sur un moyeu pour faire tourner un arbre. La géométrie des pales est un élément particulièrement critique pour le rendement de l'éolienne. Leur coût de développement et de fabrication s'en trouve considérablement alourdi. Le savoir-faire relatif à ces pales revient en outre à un nombre limité d'acteurs. Les dimensions importantes de tels dispositifs sont de plus souvent sujet à débat, voir à des oppositions avérées de la part des publics. En conséquence, elles sont le plus souvent implantées à distance des zones urbaines, voire sur des sites offshores, ce qui représente un surcoût pour l'acheminement du courant produit. Une force de vent suffisante est en outre nécessaire pour activer les pales, ce qui oblige à sélectionner les sites les plus venteux, et qui limite parfois les durées d'utilisation de l'éolienne aux périodes où la vitesse du vent est optimale. Les éoliennes de ce type produisent du courant de manière optimale pour des vitesses de vent de l'ordre de 12 m/s. En deçà de 4m/s environ, elles sont improductives et au-delà de 25 m/s, elles doivent le plus souvent être déclenchées pour éviter les dommages.

Ces différentes limitations représentent un frein au déploiement des énergies renouvelables. Les coûts d'installation des éoliennes actuelles, en particulier, sont dissuasifs. Les sites d'implantation doivent en outre être scrupuleusement étudiés tant pour des raisons de rendement que d'opinion publique.

Il convient de proposer des éoliennes meilleur marché et d'installation plus aisée, de sorte à en accroitre leur accessibilité.

### Bref résumé de l'invention

Un but de la présente invention est donc de proposer une éolienne meilleur marché que les éoliennes actuelles et plus compactes, de sorte à pouvoir être installées localement ou pour des applications spécifiques. Dans ce cadre, les éoliennes de la présente invention se destinent non seulement à la production d'électricité mais aussi aux application plus locales et diversifiées telles que le pompage d'eau, l'entrainement d'un dispositif mécanique ou tout autre application d'utilité.

Le but de la présente invention est également de proposer des éoliennes aux performances accrues. L'amélioration des performances comprend par exemple des conditions d'utilisation élargies à des vents faibles. L'objectif est dans ce contexte de proposer des éoliennes pouvant produire une énergie efficace pour des vitesses de vent inférieures à 5 m/s, ou 4 m/s ou même inférieures à 2m/s. De surcroît, l'objectif est de proposer des éoliennes pouvant être utilisées sous des vitesses de vent supérieures 25m/s, voir 30m/s. L'amélioration des performances inclue également une puissance accrue de l'énergie produite pour une vitesse de vent donnée.

Un autre but de l'invention est de proposer des éoliennes modulables et/ou adaptable aux conditions d'utilisation et/ou aux conditions environnementales.

Selon l'invention, ces buts sont atteints notamment au moyen du dispositif objet des revendications indépendantes et détaillé dans les revendications dépendantes.

Les éoliennes telles que décrites ici présentent notamment l'avantage d'une plus grande flexibilité d'utilisation. Elles peuvent en l'occurrence être utilisées pour des applications locales à moindre coût, ou pour des applications spécifiques. Leur modularité permet de diversifier à la fois les sites d'implantation et les types applications. Elles présentent en outre l'avantage d'une efficacité et/ou d'en rentabilité accrues par rapport aux solutions existantes.

### Brève description des figures

Des exemples de mise en oeuvre de l'invention sont indiqués dans la description illustrée par les figures suivantes :
- Figue 1 : Vue schématique de face d'une éolienne selon un mode de réalisation de la présente invention.
- Figure 1b: Vue schématique de face d'une éolienne selon un autre mode de réalisation de la présente invention.
- Figure 1c: Vue schématique de face d'une éolienne selon un autre mode de réalisation de la présente invention
- Figure 2 : Vue schématique de face de la partie centrale d'une éolienne selon un mode de réalisation de la présente invention.
- Figures 3 et 4: Vue schématique des détails relatifs à la disposition des pales d'une éolienne selon un mode de réalisation de la présente invention.
- Figures 5a et 5b : Vue schématique des détails relatifs à la disposition des pales d'une éolienne selon un mode de réalisation de la présente invention
- Figures 6a et 6b : Comparaison schématique des pales d'une éolienne selon l'art antérieur et de celles d'une éolienne selon la présente invention
- Figures 7a, 7b : Vue schématique des détails relatifs à l'orientation et/ou l'emplacement des pales selon un mode de réalisation de la présente invention
- Figures 8a, 8b : Vue schématique des détails relatifs à l'ajustement de la largeur des pales selon un mode de réalisation de la présente invention
- Figure 9 : Vue schématique latérale des détails relatifs à l'arrangement des pales d'une éolienne selon la présente invention
- Figure 10: Vue schématique d'une pale d'éolienne fixée sur le support, selon un mode de réalisation de l'invention.

### Exemple(s) de mode de réalisation de l'invention

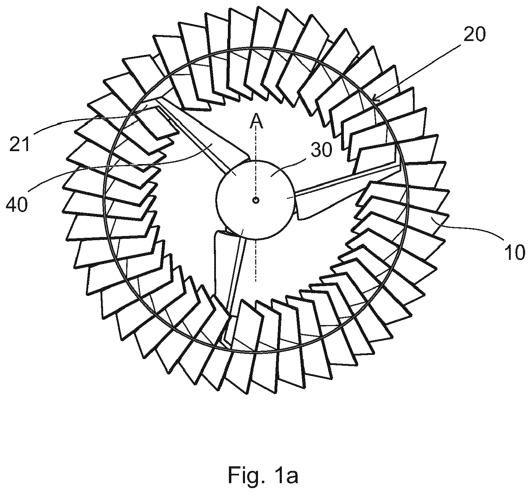

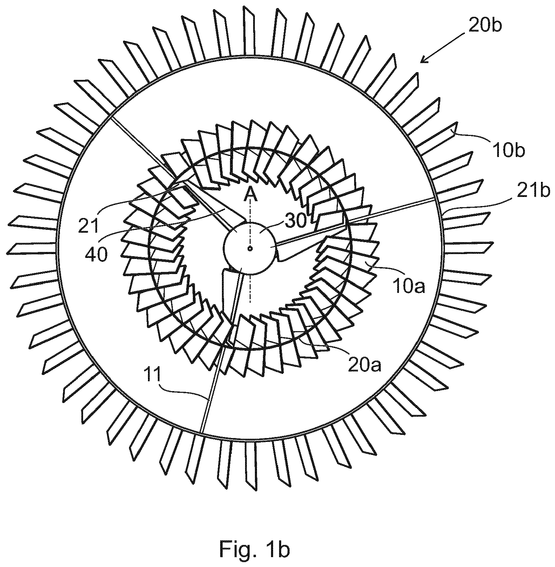

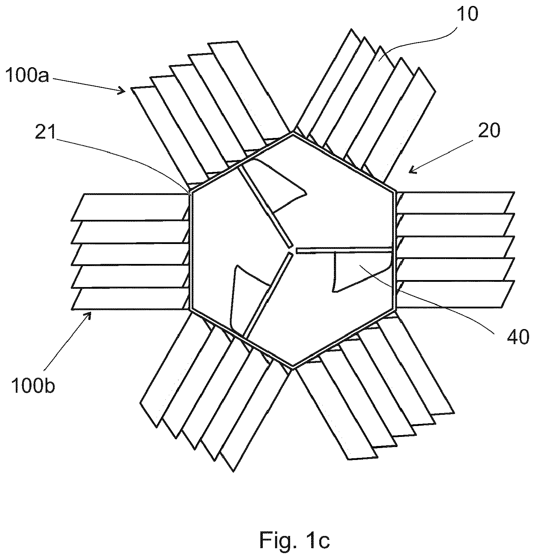

La figure 1 illustre une vue d'ensemble de l'éolienne 1 selon la présente description. Elle comprend un support de pales 20 comportant une partie circonférentielle 21 et une partie centrale pourvue d'un moyeu 30 permettant le passage et ou la fixation d'un axe de rotation A. Le moyeu 30 et la partie circonférentielle 21 peuvent résulter d'un disque plein dont le centre est percé pour faire office de moyeu 30 et dont la partie circonférentielle 21 représente le bord extérieur du disque. Pour des raisons de poids et de prise au vent, le support de pales 20 peut être partiellement évidé ou ajouré de sorte à ménager des ouvertures dans le disque. Alternativement, le moyeu 30 et la partie circonférentielle 21 peuvent comprendre, ou consister en, deux éléments distincts réunis par des liens (non représentés) faisant office de rayons. Le support de pales 20 est ainsi allégé tout en conservant une résistance structurelle suffisante. L'éolienne selon la présente invention se caractérise donc par un support de pales 20 qui comporte un point de fixation des pales, correspondant à sa partie circonférentielle 21, à distance du moyeu 30.

En plus ou alternativement, l'espace entre le moyeu 30 et la partie circonférentielle 21 peut comprendre une ou plusieurs pales internes 40. Les pâles internes 40 peuvent par exemple être liées à leur base au moyeu 30 et s'étendre vers la partie circonférentielle 21. La longueur des pales internes 40 peut correspondre à la distance entre le moyeu 30 et la partie circonférentielle 21 de sorte que l'extrémité des pales internes 40 opposée à leur base coïncide avec cette partie circonférentielle 21. Les pales internes 40 peuvent cependant être plus courtes selon les besoins. Une combinaison de pales internes 40 de différentes longueur peut en outre être envisagée. Au moins l'une des surfaces des pales internes 40 est de préférence de forme biseautée de sorte à produire un angle par rapport au plan P20 défini par le support de pales 20. Les deux surfaces des pales internes 40 peuvent être biseautées selon le même angle ou selon des angles différents. De cette manière, un flux d'air s'appuyant sur les surfaces biseautées des pales internes 40 contribue à mettre en rotation le support de pales 20 autour de son axe de rotation A. La géométrie des pales internes 40 peut être proche ou similaire ou identique à la géométrie des pales d'éoliennes couramment utilisées décrites en préambule, notamment en ce qui concerne leur galbe, leur corde, leur angle d'attaque et leur angle de fuite. Elles peuvent en l'occurrence résulter des principes aérodynamiques couramment admis.

Ainsi, les pales internes 40 peuvent présenter une géométrie effilée, plus larges à leur base qu'à leur extrémité. Alternativement ou en plus la surface des pales internes 40 peut avoir une courbure hélicoïdale ou galbée pour une meilleure performance. Le support de pales 20 peut ainsi comporter une paire de pales internes 40 ou plusieurs paires de pales internes 40 disposées de manière symétrique autour du moyeu 30. Le support de pales 20 peut alternativement comporter un jeu de trois, six ou neuf pales internes 40 disposées de manière régulière autour du moyeu 30.

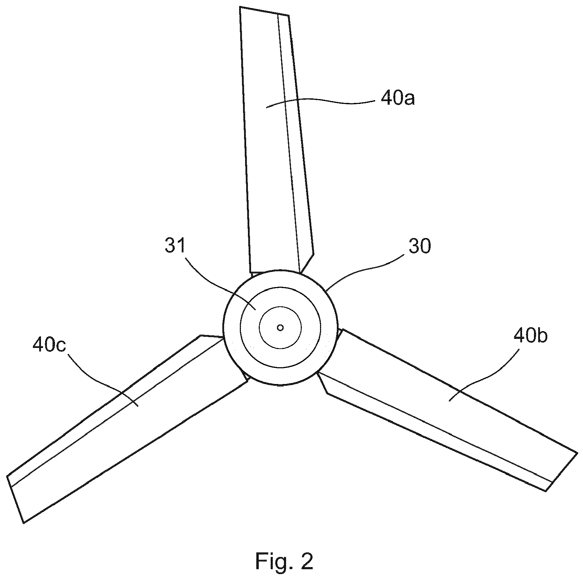

Le moyeu 30 peut prendre la forme d'un disque percé en son centre. De préférence, le moyeu 30 comporte au moins une surface conique 31 permettant de dévier le flux d'air F vers les pales internes 40. Les deux surfaces opposées du moyeu 30 peuvent comporter une telle surface conique 31 ou seulement l'une de ses deux surfaces opposées. La figure 2 montre un exemple de moyeu 30 comprenant une surface conique 31 et supportant 3 pales internes 40a, 40b, 40c.

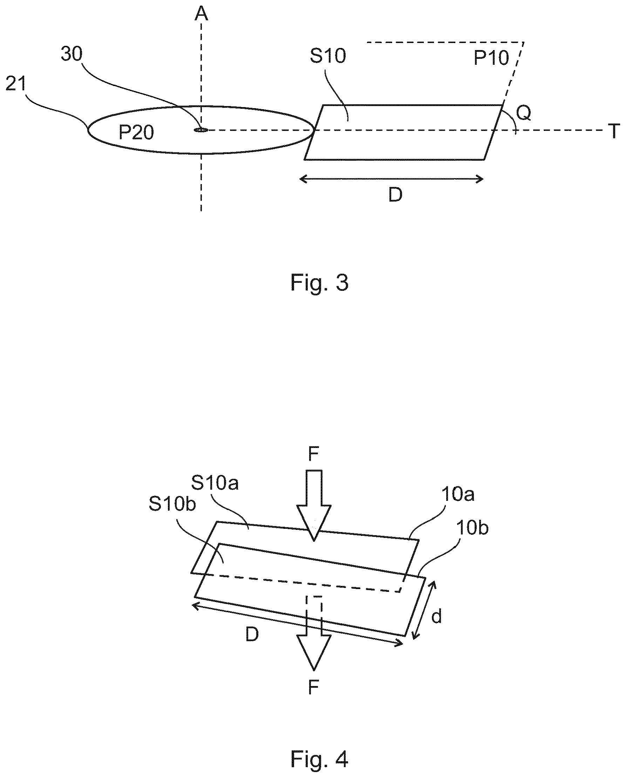

Sur la partie circonférentielle 21 du support de pales 20 sont fixées plusieurs pales externes 10. Les pales externes 10 comportent une petite dimension d, correspondant à leur largeur et une grande dimension D correspondant à leur longueur (figures 3, 4). L'épaisseur des pales externes 10 peut être homogène ou substantiellement homogène, de sorte que les deux surfaces opposées d'une même pale externe 10 sont parallèles. Les pales externes 10 peuvent être planes. Alternativement, elles peuvent comprendre une courbure, par exemple à leur extrémité la plus éloignée du moyeu 30, ou selon leur axe longitudinal dans le sens de leur plus grande dimension D. Alternativement ou en plus, le bord de fuite peut être biseauté ou recourbé de sorte à limiter les turbulences produites par le flux d'air F passant sur la surface des pales 10.

La plus grande dimension D des pales externes 10 est orientée selon un axe T perpendiculaire à l'axe de rotation A de l'éolienne. L'axe T s'inscrit ainsi dans le plan P20 du support de pales 20. Les pales externes 10 peuvent être de forme générale rectangulaire. L'un ou plusieurs de leurs coins peuvent néanmoins être arrondis. L'homme du métier comprend que la forme tridimensionnelle des pales externes 10 peut être adaptée en fonction des besoins. Cependant, les pales externes ne nécessitent pas obligatoirement l'application de principes dynamiques complexes, contrairement aux pales usuellement utilisées pour les éoliennes tri-pales.

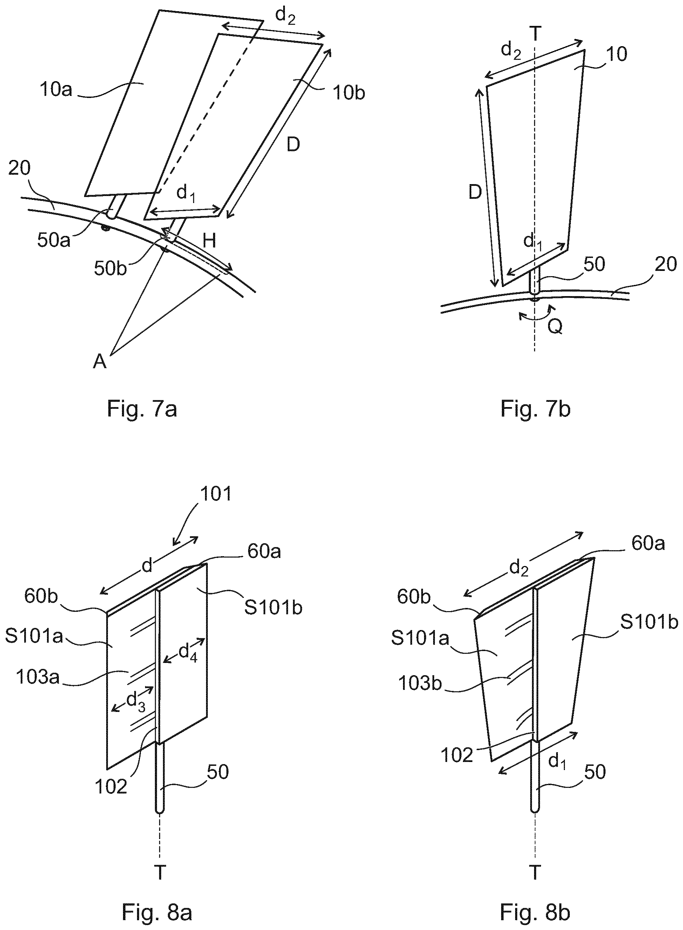

Alternativement, les pales 10 peuvent prendre une forme évasée, ou trapézoïdale, comprenant une petite largeur **d1** et une grande largeur d2, plus facilement visibles sur les figures 7a et 7b. La plus grande largeur **d2** est de préférence la plus éloignée du centre de rotation A que la plus petite largeur d1. La surface exposée au vent est ainsi accrue sur la portion la plus externe des pales 10, augmentant la force de rotation. La plus grande largeur **d2** peut être de l'ordre de 5 à 30% plus grande que la plus petite largeur **d1,** ou de l'ordre de 10 à 20% plus grande.

Un paramètre important est l'arrangement des pales entre elles et par rapport au support de pales 20. En particulier la surface des pales externes 10 s'inscrit dans un plan **P10** incliné par rapport au plan **P20** du support de pales 20 d'un angle Q compris entre 89° et 40° environ (figures 3 et 4). Un angle de 90° correspondrait à une disposition où chacune des pales externes 10 serait implantée perpendiculairement au plan P20 du support de pales 20. Selon une telle disposition, un flux d'air F arrivant selon l'axe de rotation A de l'éolienne 1 serait parallèle à la surface S10 des pales externes 10 et n'aurait aucun effet sur la mise en rotation de l'éolienne 1. A contrario, un angle trop proche du plan **P20** du support de pale 20, soit inférieur à environ 40°, offrirait une forte résistance à un flux d'air F orienté selon l'axe de rotation A de l'éolienne et ne serait pas optimal pour mettre en rotation l'éolienne, notamment en cas de vent trop faible ou trop fort. Un angle Q compris entre 89° et 40°, voir entre 80° et 60°, ou de l'ordre de 75° à 65° environ apparaît optimal.

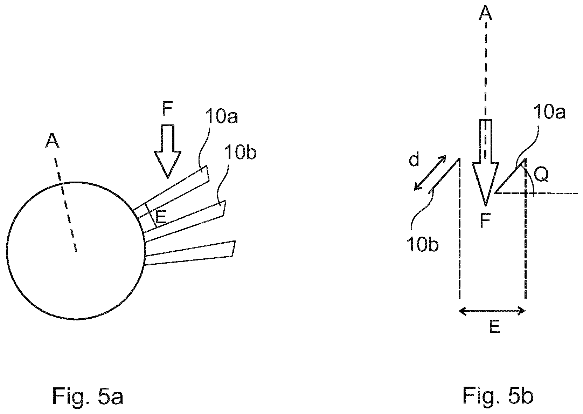

Selon un second aspect illustré par les figures 5a et 5b, les pales externes 10 sont espacées d'une distance E permettant à une portion d'un flux d'air F orienté selon l'axe de rotation A de passer entre deux pales externes contigües **10a, 10b** sans être déviée. En d'autres termes, le chevauchement des pales externes **10** est nul ou inférieur à 30% de leur surface, de préférence inférieur à environs 20% ou environ 10% de leur surface. Il est entendu que l'espace libre entre deux pales externes contiguës 10a, 10b, dépend de l'angle Q qu'elles adoptent par rapport au plan P20 du support de pales 20. Plus l'angle est proche de 90°, plus l'écartement E entre deux pales externes contiguës **10a, 10b** peut être restreint tout en ménageant un espace libre. Le chevauchement des pales externes **10a, 10b** s'accroit lorsque l'angle d'inclinaison Q diminue, obligeant à espacer davantage les pales.

Le terme «chevauchement» s'entend ici comme la partie superposée des pales externes **10a, 10b** observées selon l'axe de rotation A. Le chevauchement de deux pales externes contiguës **10a, 10b** dépend également des dimensions des pales et notamment de leur largeur d. Plus la valeur de leur largeur d est importante, plus la valeur de chevauchement est élevée pour un angle Q donné. Il convient alors d'adapter à la fois l'angle d'inclinaison Q, la largeur d des pales externes et leur espacement E pour obtenir un chevauchement adéquat, notamment inférieur à 30%, 20% ou 10% ou même nul. Un chevauchement minimal laisse la plus grande partie des pales disponibles pour la force du vent.

Le terme «espace libre» dénote l'espacement hors chevauchement entre deux pales externes 10 contiguës observées selon l'axe de rotation A. Le « flux libre » ou « flux d'air libre » désigne ainsi la partie du flux d'air F passant dans l'espace libre entre deux pales contiguës 10a, 10b. La partie de flux d'air libre peut ainsi être considérée comme la partie non déviée du flux d'air. La partie du flux d'air déviée par les pales externes 10 correspond à la proportion du flux d'air venant au contact de la surface S10 des pales externes 10. La proportion de flux d'air dévié par rapport au flux d'air libre est comprise entre 5% et 50% environ, de préférence entre 30% et 40% environ ou entre 10% et 20%. L'espace libre entre deux pales externes peut être de l'ordre de 5% à 50% de l'espace entre les deux pales, le reste étant occupé par la surface inclinée d'une des deux pales, en particulier par la pale la plus en aval du flux F. Le rapport entre la surface des pales et l'espace libre peut être modulé ou prédéterminé en fonction des conditions d'utilisation ou des applications. La vitesse du vent ou la vitesse moyenne du vent peut être un des paramètres considérés pour l'optimisation de ce rapport entre la surface des pales externes 10 et l'espace libre entre les pales.

L'écartement E des pales externes 10 désigne la distance séparant deux pales contiguës. Pour les besoins de la présente description, elle est prise au niveau de la partie circonférentielle 21 du support de pales 20. En d'autres termes, la tangente à la partie circonférentielle 21 permet de déterminer l'écartement E entre deux pales externes.

Selon un mode de réalisation, les pales externes 10 peuvent être évasées vers leur extrémité la plus éloignée du moyeu 30, c'est-à-dire d'une largeur d supérieure à leur extrémité par rapport à leur base, de sorte à minimiser la surface de chevauchement de deux pales contiguës 10a, 10b. Il est entendu que la distance séparant deux pales externes contiguës 10a, 10b augmente en s'éloignant de leur base. Lorsque les pales externes sont de géométrie rectangulaire, c'est-à-dire de largeur d constante, l'espace libre s'accroit depuis leur base jusqu'à leur extrémité. En d'autres termes la surface de chevauchement diminue depuis la base des pales vers leur extrémité. La proportion du flux d'air F passant librement entre deux pales contiguës s'accroit donc depuis la base des pales externes 10 vers leur extrémité.

Selon un mode de réalisation particulier la largeur d des pales externes 10 augmente depuis leur base vers leur extrémité de sorte à maintenir un espace libre constant entre deux pales externes contiguës 10a, 10b. Le flux d'air F passant librement entre deux pales contiguës reste ainsi constant d'un bout à l'autres des pales externes 10. La variation de la largeur d peut dépendre de l'angle d'inclinaison Q ou d'autres facteurs. Le gradient d'augmentation de la largeur d peut alors être déterminé par une fonction de l'angle d'inclinaison Q.

Dans le cas des pales évasées ou trapézoïdales, une petite d1 et une grande d2 largeurs peuvent être déterminées, plus facilement visibles sur les figures 7a et 7b. La plus grande largeur **d2** est de préférence la plus éloignée du centre de rotation A que la plus petite largeur **d1.** La surface exposée au vent est en outre accrue sur la portion la plus externe des pales 10, augmentant la force de rotation. La plus grande largeur **d2** peut être de l'ordre de 5 à 30% plus grande que la plus petite largeur **d1,** ou de l'ordre de 10 à 20% plus grande. D'autres rapports peuvent être envisagés en fonction des besoins.

La distance E séparant deux pales externes contiguës **10a, 10b,** doit cependant rester inférieure à une valeur limite maximale. Il est en effet nécessaire que les pales externes 10 soient suffisamment proches les unes des autres. Une telle disposition permet d'augmenter le nombre de pales externes 10 disposées sur le support de pales 20 et d'accroitre ainsi l'efficacité de l'éolienne ou sa sensibilité aux flux d'air F.

En outre, un espacement E réduit peut permettre d'influencer le débit et/ou la vitesse de progression de l'air du flux F lorsqu'il passe entre les pales. Deux pales contiguës ont alors un effet synergique. Il convient donc de trouver un compromis adéquat entre un trop grand espacement E, où les pales n'auraient aucun effet synergique, et un espacement trop étroit où le chevauchement des pales externes 10 seraient trop important et conduirait à dévier une grande proportion du flux d'air F. Un chevauchement de l'ordre de 5% à 10% peut à cet effet apparaître optimal pour une variété d'applications et de conditions d'utilisation.

Selon une disposition avantageuse, l'écartement E des pales externes 10 est compris entre 0.3 et 3 fois la largeur d des pales, ou entre 0.3 et 3 fois la plus petite largeur **d1** des pales, ou entre 0.3 et 3 fois la plus grande largeur **d2** des pales 10. La figure 5b, qui donne une vue de la disposition de deux pales externes consécutives selon l'axe transversal T, depuis l'extérieur de l'éolienne, rend compte d'une telle disposition.

Selon une autre disposition, l'écartement E des pales externes 10 augmente de façon inversement proportionnelle avec l'angle d'inclinaison Q. Ainsi, lorsque l'angle d'inclinaison Q diminue, l'écartement E augmente de manière proportionnelle de manière à préserver un espace libre suffisant. Selon une autre disposition, le chevauchement des pales externes 10 est limité à 30%, voire 20% ou 10% de leur surface S10. L'écartement des pales E est de préférence prédéterminé et reste constant une fois l'éolienne mise en service. L'augmentation inversement proportionnelle de l'écartement E en fonction de l'angle d'inclinaison Q s'entend donc comme une relation statique entre ces deux paramètres E et Q. Cela n'exclue pas cependant de ménager un dispositif de variation dynamique d'angle Q des pales externes 10. Dans ce cas, la relation entre l'écartement E et l'angle d'inclinaison Q est définie pour un angle Q donné.

Selon un mode de réalisation plus spécifique, à la fois l'écartement E des pales 10 et leur angle d'inclinaison Q peuvent être ajustés, comme explicité plus en détails plus bas à l'aide des figures 7a et 7b.

Selon une disposition privilégiée, l'écartement E des pales est compris entre 0,5 et 1,5 fois la valeur de leur largeur d, prise à leur base, et l'angle d'inclinaison Q est compris entre 89° et 70° environ.

Selon une autre disposition privilégiée, l'écartement E des pales est compris entre 1 et 2,5 fois la valeur de leur largeur d, prise à leur base, et l'angle d'inclinaison Q est compris entre 80° et 60° environ.

Selon une disposition avantageuse, le chevauchement des pales externes est limité à environs 20% ou environ 10% maximum de leur surface S10 et l'angle d'inclinaison Q est compris entre 89° et environ 70°.

Selon une autre disposition avantageuse, l'écartement E des pales est compris entre 0.5 et 1,5 fois la valeur de leur largeur **d,** prise à leur base, et le chevauchement est limité à environs 20% ou environ 10% de leur surface **S10.**

Les pales externes 10 peuvent être associées au support de pales 20 de manière fixe et inamovible. L'angle d'inclinaison Q, ainsi que le taux de chevauchement est alors prédéfini et fixe. Alternativement, elles peuvent y être associées au moyen d'une liaison pivot 50 permettant d'en modifier l'angle d'inclinaison Q, soit manuellement soit de manière automatisée. En particulier la liaison pivot 50 s'oriente selon un axe T orthogonal à l'axe de rotation A de l'éolienne (Figure 7a, 7b) permettant ainsi la rotation de la pale 10 correspondante. La liaison 50 comporte les moyens de serrage ou de verrouillage nécessaires pour maintenir la pale correspondante à une inclinaison Q donnée. Il peut comprendre par exemple un système de vis ou d'écrou permettant de serrer la pale sur son support de pale 20. Un dispositif cranté peut en outre permettre d'arranger les pales 10 selon des angles d'inclinaison Q prédéterminés. L'angle d'inclinaison des pales externes 10, ainsi que leur degré de chevauchement peut ainsi être modulé en fonction des paramètres considérés, tels que la force du vent ou sa direction. Alternativement ou en plus, les pales externes **10** peuvent être associées au support de pales 20 de manière amovible de sorte que leur nombre peut être modifié en fonction de paramètres considérés tels que la force du vent ou sa direction. Il peut être prévu par exemple qu'une pale externe 10 sur deux soit amovible et que les autres soient fixes. Il peut en outre être prévu que l'angle d'inclinaison Q d'une pale sur deux puisse être modulé de sorte à contrôler l'effet de synergie de deux pales externes contiguës. Il peut en outre être prévu de fixer sur le support de pales 20 des jeux de pales différents, notamment en termes de dimensions telles que leur largeur d ou leur longueur D. De cette manière les pales externes 10 peuvent être aisément remplacées soit à l'occasion de changement de conditions d'utilisation ou de changement d'application, ou simplement pour une meilleure flexibilité lors de l'installation de l'éolienne 1. Par exemple, un même support de pales 20 peut être conçu pour toutes les dispositions.

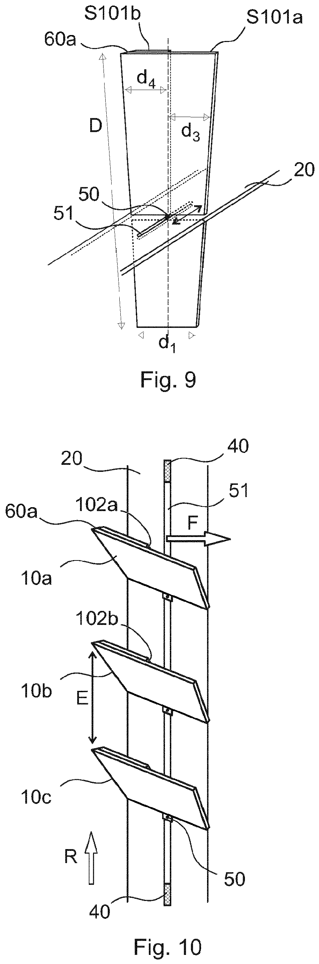

Les figures 7a et 7b illustrent un mode de réalisation où les pales 10 sont montées sur leur support de pales 20 au moyen d'une liaison pivot 50, permettant de moduler leur angle d'inclinaison Q. La liaison pivot 50 peut par exemple s'inscrire dans un trou dédié dans le support de pales 20. Dans ce cas, la position des pales 10 sur le support de pales 20 est prédéterminée et leur orientation peut être ajustée. Alternativement une fente de translation 51 (figures 9 et 10), ou tout autre dispositif adéquat, peut être aménagée dans le support de pales 20 de sorte à permettre à la liaison pivot 50 de se déplacer d'une distance angulaire H sur le support de pale 20, permettant ainsi de faire varier l'écartement E des pales 10. Le déplacement angulaire H peut être de l'ordre de 1° à 10° par exemple ou de l'ordre de 2° à 5°. D'autres valeurs de déplacement angulaire H peuvent être envisagées. Alternativement, le déplacement angulaire est totalement libre le long de la partie circonférentielle du support de pales 20. Pour ce faire, une fente ou un rail ou une gorge ou tout autre moyen adéquat parcourt de manière continue la périphérie du support de pale 20, de sorte à permettre un placement libre des pales 10. En d'autres termes, les pales 10 peuvent être disposées à n'importe quel endroit du support 20. Pour plus d'aisance, des positions angulaires prédéterminées peuvent être matérialisées, par exemple au moyen de crans, permettant de disposer les pales 10 à des intervalles réguliers prédéterminés. La distance angulaire H conditionne l'écartement E des pales 10. Selon un mode de réalisation, l'écartement E des pales 10 peut ainsi varier dans une plage limitée entre un écartement minimal E1 et un écartement maximal E2. Dans ce cas, l'écartement maximal E2 peut être de l'ordre de 5 à 50% plus grand que la valeur minimale E1 ou de l'ordre de 10% ou 20% ou correspondre à d'autres plages adéquates.

Bien qu'une liaison pivot 50 soit décrite ici, il est entendu que tout moyen équivalent peut être utilisé, en fonction de l'arrangement des pales sur leur support de pales 20.

Selon un mode de réalisation, illustré par les figures 8a et 8b, les pales 10, ou certaines des pales 10 de l'éolienne 1 comportent plusieurs parties combinées dont les surfaces s'inscrivent dans des plans différents mais parallèles. Par exemple, une pale 101 peut comprendre une première partie offrant une première surface S101a et une seconde partie offrant une seconde surface S101b, les première S101a et seconde S101b surfaces étant séparées par un décrochement 102, formant une surface non parallèle aux premières S101a et seconde S101b surfaces. En l'occurrence, le décrochement 102 peut produire une surface orthogonale aux premières S101a et seconde S101b surfaces. Le décrochement 102 offre une surface supplémentaire d'aspiration au vent. Les première et seconde parties peuvent être symétriques, de sorte que le décrochement 102 corresponde à la partie centrale de la pale 101, et orienté selon son axe longitudinal T. Les première et seconde parties peuvent néanmoins être de différentes formes ou dimensions. Par exemple, la première partie peut avoir un largeur d3 et la seconde partie peut avoir une largeur d4, ou d3 et d4 sont égale ou différentes l'une de l'autre à une hauteur donnée de la pale 10. Le rapport des largeurs d3 et d4 des première et seconde parties peut varier de 1/10 à 10/1. Selon une disposition particulière, la largeur d4 est 2, 3 ou 4 fois plus faible que la largeur d3. Selon cette disposition, la seconde partie s'inscrit en surépaisseur par rapport à la première partie. Le bord latéral de la seconde partie, correspondant par exemple au bord d'attaque de la pale, est de préférence biseauté. Il comporte ainsi un chanfrein 60a (Figures 9 et 10). Les première et seconde parties peuvent être solidaires et fixes l'une par rapport à l'autre.

Selon un mode de réalisation les première et seconde parties de la pale 101 peuvent être mobiles l'une par rapport à l'autre de sorte à se recouvrir l'une l'autre sur une surface variable. Des moyens de coulisse 103a, 103b peuvent être prévus à cet effet, au besoin accompagnés d'un ou plusieurs moyens de serrage, tel qu'un système de vis ou d'écrou ou de clips, pour maintenir en place les première et seconde parties une fois leur position relative déterminée. Selon une disposition particulière, les moyens de coulisse peuvent être rectilignes **103a** de sorte que les première et seconde parties de la pale **101** peuvent glisser l'une sur l'autre d'une valeur égale sur toute leur longueur D. En d'autres termes, la largeur de la pale **101** peut être modifiée d'une même valeur à chacune de ses extrémités. Alternativement, les moyens de coulisse peuvent être courbes **103b,** de sorte que le glissement des première et seconde partie l'une sur l'autre s'effectue selon un arc de cercle. Les petite **d1** et grande **d2** largeurs de la pale **101** peuvent ainsi être modifiées l'une par rapport à l'autre. Le degré d'évasement de la pale **101** peut ainsi être ajusté en fonction des besoins, notamment en fonction de la vitesse moyenne du vent, de l'écartement E des pales et/ou de leur inclinaison Q, de leur nombre, de l'orientation de l'éolienne 1 le cas échéant, de la force requise et de tout autre paramètre jugé pertinent.

Bien que deux surfaces **S101a** et **S101b** soient ici décrites, les pales peuvent comporter plus de deux surfaces disposées dans des plans parallèles tel que décrit ci-dessus.

Les moyens de coulisse **103a, 103b** peuvent être inclus en plus de la liaison pivot 50 ou en remplacement de la liaison pivot 50 permettant de modifier l'inclinaison Q des pales externes. Ils peuvent en outre compléter ou remplacer la fente permettant de modifier l'écartement E des pales externes grâce à leur déplacement angulaire H. L'inclinaison Q, l'écartement **E,** la largeur **d** des pales, ainsi que leur degré d'évasement peuvent ainsi être indépendamment l'un de l'autre ajustés en fonction des besoins. Les besoins peuvent inclure par exemple l'obtention du degré de chevauchement des pales adéquat pour produire un maximum d'énergie avec une force de vent optimale, typiquement comprise entre 6 et 20 m/s. Les besoins peuvent alternativement correspondre à l'exploitation de l'éolienne par vent faible, typiquement inférieur à 8 ou 6 m/s, ou par vent fort, typiquement supérieur à 25 m/s et jusqu'à des vitesses de 30 m/s ou 40 m/s ou 50 m/s. Les besoins peuvent correspondre à la modulation de la puissance de l'éolienne 1 par vent constant, ce qui permet notamment d'éviter son débrayage dans le cas ou sa puissance dépasse la puissance requise.

Les figures 9 et 10 représentent les détails d'un mode de réalisation. Chacune des pales externes **10a, 10b, 10c** est fixée sur le support de pales 20 au moyen d'une liaison pivot 50 traversant une fente de translation 51 disposée sur la périphérie du support de pales 20 et maintenue par un moyen de fixation (non représenté). Chacune des pales se prolonge de part et d'autre du support de pales 20. Les pales **10a, 10b, 10c** sont inclinée d'un angle Q par rapport au plan du support de sorte que leurs première **S101a** et seconde **S101b** surface soient en aspiration par rapport à la direction du vent F. Chacune des pales comporte sur au moins leur bord d'attaque un chanfrein 60a de sorte à limiter la résistance au vent. La seconde surface **S101b,** disposée en surépaisseur de la première surface **S101a** est arrangée de sorte que la surface 102 du décrochement soit en aspiration par rapport à la direction du vent F. L'éolienne 1 est mise en rotation dans le sens R. La surface des pales **10a, 10b, 10c,** opposée à leurs première **S101a** et seconde **S101b** surfaces est lisse et sans décrochement.

La modification de l'un ou plusieurs de l'inclinaison Q, de l'écartement **E** et la largeur des pales externes **10, 101,** peut être manuelle. Dans ce cas, les réglages sont effectués pour une durée d'utilisation significative du fait des efforts à fournir. Ils peuvent être basés sur des conditions d'utilisation moyennes de l'éolienne **1.** Alternativement, l'un ou plusieurs de ces paramètres peuvent être modifiés de manière motorisée, par exemple au moyen d'actuateurs électriques, lesquels peuvent être activés en temps réel en fonctions des conditions ponctuelles. Leur activation simultanée peut être automatisée sur la base d'un nombre de paramètres restreints tels que la vitesse et/ou l'orientation du vent et les besoins requis en énergie.

Selon une disposition particulière, l'écartement E, l'inclinaison Q et la largeur des pales le cas échéant, sont modulés de concert de sorte à produire l'effet synergique attendu. A cet effet, une table de correspondance peut être prévue, élaborée sur la base de données expérimentales préalables, ou de données simulées, définissant les valeurs ou des plages de valeurs combinées de l'écartement E, de l'inclinaison Q et/ou de la largeur des pales adaptées à produire l'effet recherché, en fonction notamment des besoins déclinés ci-dessus. L'utilisateur peut ainsi se référer à une table de correspondance lors du réglage de l'éolienne 1, qu'il soit manuel ou mécanisé. Selon un mode de réalisation particulier, une telle table de correspondances peut être implémentée sous forme d'un ou plusieurs fichiers électroniques, dans une unité de contrôle, en combinaison avec la mécanisation de l'écartement **E,** de l'inclinaison **Q** et de la largeur le cas échéant des pales, de sorte que la fixation de l'un de ces paramètres génère automatique la valeur des autres de ces paramètres. Selon un mode de réalisation plus élaboré, un ou plusieurs capteurs peuvent être prévus, notamment pour mesurer en temps réel la vitesse du vent et pour adapter en conséquence de manière automatique l'un ou plusieurs de ces paramètres. Une interface de commande peut être prévue pour permettre à l'utilisateur d'entrer dans l'unité de contrôle une ou plusieurs données d'entrées, lesquelles sont automatiquement matérialisées par une sélection adaptée de l'écartement **E,** de l'inclinaison **Q** et/ou de la largeur des pales **10.** De telles valeurs d'entrées comprennent par exemple un besoin particulier de l'utilisateur tel que la puissance requise, ou bien l'un des paramètres précités relatifs à l'écartement E, l'inclinaison Q et la largeur des pales.

Selon un mode de réalisation, les pales externes 10 sont associées par leur base à la partie circonférentielle 21 du support de pales 20. La liaison pivot 50 peut être utilisée à cette fin, bien qu'une liaison fixe puisse également être envisagée. Alternativement ou en plus, une prolongation des pales externes 10 ou de certaines des pales externes 10 vers l'intérieur de la partie circonférentielle 21 peut être prévue, comme illustrée à la figure 1 et plus en détail à la figure 10 Par exemple, une pale sur deux peut comporter une prolongation vers le centre de l'éolienne 1 de sorte à accroitre la surface efficace. Alternativement, un jeu de pales additionnelles peut être associé à la partie circonférentielle 21 et orienté vers le centre de l'éolienne 1. Alternativement, les pales externes 10 peuvent être insérées dans la partie circonférentielle 21 de sorte à dépasser vers le moyeu 30 d'une longueur prédéterminée. Elles peuvent en outre y être insérées de sorte que leur angle d'inclinaison Q puisse être modulé, manuellement ou de manière automatisée. A cet effet, les bords opposés des pales externes 10 peuvent par exemple comporter chacun au moins un goujon, lesquels sont maintenus par deux rails parallèles ou tout autre dispositif équivalent, formant le support de pales 20. Alternativement, un moyen de fixation, associé à la liaison pivot 50, permet de fixer chaque pale 10 sur une fente de translation 51, de sorte à laisser une partie de la pale 10 dépasser du support 20 vers le moyeu 30. (Figure 9). La prolongation des pales externes 10 vers l'intérieur du support de pales 20 ou l'ajout de pales additionnelles à cet emplacement, permet d'accroitre la surface utile et par conséquent l'efficacité de l'éolienne. Le chevauchement tend à s'accroitre du fait du rapprochement des pales dans un espace plus restreint. La partie des pâles externes 10 se prolongeant vers l'intérieur du support de pales 20, ou les pales additionnelles implantées selon cette disposition peuvent alors différer par rapport aux caractéristiques des pales externes 10 précédemment décrites, notamment en termes d'angle d'inclinaison et de largeur. Il est ici précisé que les définitions de chevauchement, d'espace libre, d'angle d'inclinaison et d'écartement s'appliquent de préférence exclusivement aux pales externes 10 ou à leur partie périphérique externe lorsqu'elles comportent un prolongement vers l'intérieur du support de pales 20.

La présence de pales additionnelles ou d'un prolongement des pales externes 10 vers l'intérieur du support de pales 20 n'exclue pas la présence de pales internes 40. L'éolienne selon la présente invention se caractérise donc par la présence d'un ou plusieurs jeux de pales concentriques, l'un des jeux de pales étant fixé à distance du moyeu 30 sur la partie circonférentielle 21 du support de pales 20. La partie la plus périphérique de l'éolienne présentant la meilleure surface utile, les pales externes 10 présentent l'avantage d'apporter une force motrice optimale tout en laissant l'espace central disponible pour améliorer les propriétés globales de l'éolienne 1.

La partie circonférentielle 21 du support de pales 20 peut représenter un diamètre correspondant à une valeur comprise entre environ 1/3 et environ 2/3 du diamètre global de l'éolienne. Il peut correspondre à peu près à la moitié du diamètre global. Le rapport entre le diamètre de la partie circonférentielle 21 du support de pales 20 et le diamètre global peut néanmoins être ajusté en fonction des besoins. Le diamètre global s'entend comme le diamètre d'une extrémité à l'autre des pales externes 10 opposées par rapport au moyeu 30.

Le diamètre global de l'éolienne selon la présente description peut être par exemple compris entre environ 50 cm et 3 ou 4 mètres en fonction des besoins. Elle est donc très compacte par rapport aux éoliennes tri-pales communes.

Une telle disposition permet d'optimiser les performances de l'éolienne en fonction des conditions ou des applications. Les pales externes 10 peuvent par exemple être conçues comme élément de puissance de l'éolienne pour des vitesses de vent optimales, que leur angle d'inclinaison Q soit prédéterminé ou variable. Les pales internes 40, de géométrie différente, facilitent alors la mise en rotation par vent faible, inférieur au vent optimal, compris entre environ 6 et 20 m/s. Les pales externes 10 combinées aux pales internes 40 permettent ainsi un meilleur rendement par vent faible, notamment de vitesse inférieure à 4m/s ou même 2 m/s. Pour des vitesses de vent supérieures à 20 m/s ou 25m/s, les pales externes 10 peuvent être orientées de sorte à offrir le minimum de surface au vent, soit en limitant au maximum le chevauchement soit au contraire en les inclinant d'un angle Q maximal pour augmenter l'espace libre. Les pales internes 40 peuvent alors être conçues pour être motrices dans de telles conditions sans qu'il ne soit nécessaire de déclencher ou débrayer l'éolienne. Les pales additionnelles ou la prolongation des pales externes 10 vers l'intérieur du support de pales 20 peuvent être inclinables de manière dynamique pour par exemple limiter les effets des vents forts de vitesse supérieure à 20 m/s ou 25m/s et favoriser les effets de vents faibles, notamment de vitesse inférieure à 8m/s ou 4m/s. Alternativement elles peuvent être d'inclinaison fixe et de géométrie différente de celle des pales externes 10 ou des pales internes 40 de sorte à assister ou complémenter l'effet des autres pales.

Les pales externes 10, le support de pales 20, la partie circonférentielle 21, peuvent indépendamment être constitués de, ou comporter un métal, un alliage, un polymère rigide, un polymère souple, ou une combinaison de tels matériaux. Ils peuvent en outre être revêtus d'une couche protectrice et/ou hydrophobe.

Selon d'autres modes de réalisation, l'éolienne 1 selon la présente description peut comporter plusieurs séries de pales externes 10, chacune disposée sur une partie circonférentielle 21 d'un support de pale comportant plusieurs parties circonférentielles concentriques. Les pales externes 10 des différentes séries peuvent alors être identiques ou différentes, et indépendamment dynamiquement adaptables ou fixes. Un tel exemple de réalisation est illustré à la figure 1b. Dans ce cas, un premier jeu de pales externes 10a est disposé sur un premier support de pales 20a tel que décrit ci-dessus. Un second support de pales 20b, comportant une partie circonférentielle **21b** concentrique au premier support de pales **20a,** est pourvu d'un second jeu de pales externes **10b.** Les pales externes **10b** du second jeu de pales peuvent être disposées selon les caractéristiques décrites plus haut pour le premier jeu de pales externes 10. Les pales du second jeu de pales externes **10b** peuvent alternativement avoir des caractéristiques différentes. Elles peuvent par exemple être orientées perpendiculairement au plan formé par les deux supports de pales **20a, 20b.** Le second support de pales **20b** peut être relié au moyeu 30 ou au premier support de pale **20a** par un ou plusieurs moyens d'assemblage 11 tels que des rayons ou équivalents. Le diamètre du second support de pales **20b** peut alors représenter plus des 2/3, voire les 4/5 ou plus du diamètre total de l'éolienne.

Il est entendu que le support de pales 20, bien que représenté comme circulaire, n'exclue pas d'autres formes géométriques. Sa partie circonférentielle 21 peut par exemple être ovoïde, ou comporter plusieurs segments connectés de manière angulaire. Le support de pale 20 peut alors prendre la forme d'un polygone, tel qu'un pentagone, un hexagone ou un octogone, voire un carré, comme illustré par la figure 1c.

Il est en outre considéré que les pales externes 10 disposées sur le support de pales 20, bien que représentées de manière régulière et homogène, peuvent être regroupées en en sous-ensembles **100a, 100b.** Les pales externes 10 au sein d'un même sous-ensemble sont de préférence orientées de manière homogène. Cela n'exclue pas que les pales externes de deux sous-ensembles différents puissent avoir une orientation ou des caractéristiques différentes parmi celles énoncées dans la présente description.

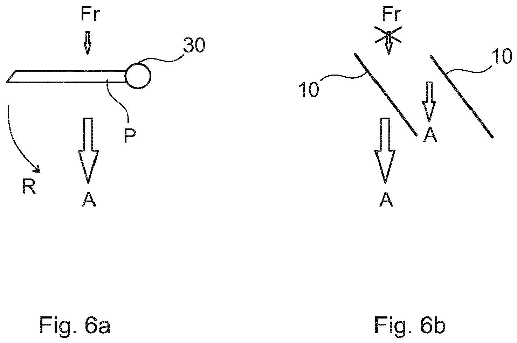

Les figures 6a et 6b permettent de comparer les effets d'une pale P d'une éolienne traditionnelle, exempte de tout chevauchement. L'effet d'aspiration du vent A' fait tourner l'éolienne dans le sens de rotation **R.** La surface arrière de la pale **P** en rotation ne bénéficiant d'aucun chevauchement d'une pale adjacente, elle subit en outre une force de freinage Fr qui s'oppose partiellement à sa rotation. La disposition selon la présente invention est illustrée par la figure 6b, dans laquelle le chevauchement des pales contiguës limite ou annule les forces de freinage Fr. En outre l'aspiration du vent A' se cumule, produisant ainsi un bilan plus favorable à la rotation de l'éolienne.

Selon une disposition particulière, l'éolienne 1 peut être montée sur un arbre entrainant un dispositif mécanique tel qu'une pompe, ou à un dispositif électrique tel qu'une source lumineuse ou à un générateur d'électricité ou une turbine, ou tout autre dispositif utile. Alternativement, plusieurs éoliennes telles que décrites ici peuvent être combinées à un même arbre de sorte à en augmenter la puissance. Alternativement ou en plus, plusieurs des éoliennes ici décrites peuvent être localement implantées de manière indépendantes, entrainant chacune un arbre. Les forces motrices indépendantes ainsi générées peuvent être combinées en aval pour en mutualiser les puissances, grâce à un dispositif adapté.

L'éolienne peut être orientée fixement de manière prédéterminée, par exemple selon un axe est-ouest ou tout autre axe réputé correspondre à la direction prédominante des vents. Alternativement, elle peut être pivotable de sorte pouvoir être orientée en fonction des vents dominants du moment.

La présente description couvre eu outre un dispositif autonome tel qu'une pompe, une génératrice ou turbine, ou une machine mécanique comprenant une ou plusieurs éoliennes telles que décrites ici.

### Numéros de référence employés sur les figures

- 1: Eolienne
- 10, 10a, 10b, 101: Pales externes
- 20, 20a, 20b: Support de pales
- 21, 21a, 21b: Partie circonférentielle
- 30: Moyeu
- 31: Partie conique
- 40, 40a, 40b: Pales internes
- 50: Liaison pivot
- 51: Fente de translation
- 60a,60b: Chanfreins
- 100a,100b: Sous-ensemble de pales
- 102: Décrochement
- 103a, 103b: Moyens de coulisse
- S101a, S101b: Surfaces des parties de pales
- d1, d2, d3, d4: Largeur des pales externes
- D: Longueur des pales externes
- F: Flux d'air
- A: Axe de rotation
- T: Axe transversal
- Q: Angle d'inclinaison
- P: Pale traditionnelle
- A': Force d'aspiration
- Fr: Force de freinage
- P10: Plan des pales externes
- P20: Plan du support de pales
- S10: Surface des pales externes

## Revendications

1. Eolienne (1) comprenant un moyeu (30) et au moins un support de pales (20) formant un plan (P20) perpendiculaire à l'axe de rotation (A), sur lequel sont disposées une pluralité de pales externes (10) ayant une largeur (d) et une longueur (D) orientée selon un axe (T) perpendiculaire à l'axe de rotation (A), les pales étant déportées du moyeu (30) et orientées selon un plan (P10), ledit plan (P10) étant incliné par rapport au plan (P20) d'un angle (Q) compris entre environ 89° et environ 40° et espacées d'une distance (E) comprise entre 0.3 et 3 fois la largeur (d) desdites pales externes

2. Eolienne selon la revendication 1, l'écartement (E) et/ou l'angle d'inclinaison (Q) et/ou la largeur (d) étant déterminés de sorte que l'espace libre, hors chevauchement de deux pales externes contiguës observées selon l'axe de rotation (A), est compris entre environs 5% et 50% de l'espace entre les deux pales externes, le reste étant occupé par la surface inclinée d'une des deux pales externes et/ou le taux de chevauchement de deux pales externes contiguës (10a, 10b) est inférieur à 30% environ, de préférence inférieur à 20% de leur surface (S10).

3. Eolienne selon l'une des revendications 1 et 2, la largeur (d) desdites pales étant comprise entre une plus petite largeur (d1) et une plus grande largeur (d2) de sorte à conférer aux pales une forme évasée.

4. Eolienne selon l'une des revendications 1 à 3, l'un ou plusieurs de l'écartement (E), de l'angle d'inclinaison (Q) et de la largeur (d) desdites pales externes pouvant être modulé, manuellement ou de manière motorisée.

5. Eolienne selon l'une des revendications 1 à 4, chacune desdites pales externes (10) étant solidarisée audit support de pales (20) au moyen d'une liaison pivot (50), correspondant à un trou du support de pale (20) de sorte à en faire varier son angle d'inclinaison (Q), ou à une fente du support de pale (20) permettant outre la variation de l'angle d'inclinaison (Q) une variation angulaire (H) par rapport au centre de rotation (A), de sorte à modifier l'écartement des pales externes (10).

6. Eolienne selon l'une des revendications 1 à 5, lesdites pales externes (10) étant fixées de manière amovible ou inamovible sur ledit support de pales (20).

7. Eolienne selon l'une des revendications 1 à 6, lesdites pales externes ou une partie d'entre elles comprenant au moins une première et une seconde parties combinées, dont les surfaces correspondantes (S101a, S101b) s'inscrivent dans des plans différents mais parallèles, et sont séparées par un décrochement (102).

8. Eolienne selon la revendication 7, lesdites au moins première et seconde parties pouvant coulisser l'une par rapport à l'autre au moyen d'un moyen de coulisse (103a, 103b) de sorte à faire varier leur largeur (d) et/ou leur degré d'évasement.

9. Eolienne selon l'une des revendications 1 à 8, les valeurs d'écartement (E), d'angle d'inclinaison (Q) et de largeur (d) des pales étant déterminées sur la base d'une table de correspondance élaborée à partir de résultats expérimentaux ou de simulation, où ces valeurs dépendent les unes des autres.

10. Eolienne selon l'une des revendications 1 à 9, où au moins l'écartement (E) et l'angle d'inclinaison (Q) des pales externes (10) sont modifiables de façon mécanisée, ladite éolienne comprenant en outre un capteur de vitesse et/ou de direction du vent, et une unité de contrôle comprenant une table de correspondance entre lesdites valeurs d'écartement et d'angle d'inclinaison, de sorte qu'elles soient ajustées en temps réel sur la base des données détectées par le capteur.

11. Eolienne selon l'une des revendications 1 à 10, ledit support de pales (20) comprenant au moins une partie circonférentielle (21), la base desdites pales externes (10) étant fixée à ladite partie circonférentielle, l'éolienne comprenant en outre un jeu de pales additionnelles disposées sur la partie circonférentielle (21) et orientées vers le moyeu (30), ou bien lesdites pales externes (10) étant insérées dans ladite partie circonférentielle de sorte qu'une de leur extrémité se prolonge vers l'intérieur de la partie circonférentielle.

12. Eolienne selon l'une des revendications 1 à 11, comprenant en outre un jeu de pales internes (40) disposées sur le moyeu (30) lesdites pales internes (40) ayant une surface biseautée et/ou étant de forme hélicoïdale.

13. Eolienne selon l'une des revendications 1 à 12, ledit au moins un support de pales (20) ayant une géométrie circulaire, ovoïde ou polygonale.

14. Eolienne selon l'une des revendications 1 à 13, comprenant au moins un support de pales (20b) additionnel, concentrique audit support de pale (20).

15. Dispositif autonome tel qu'une pompe, une turbine ou une génératrice, comprenant au moins une éolienne selon l'une des revendications 1 à 14.
